# EUROPÄISCHE PATENTSCHRIFT

(11) **EP 2 149 426 B1**
(45) Veröffentlichungstag und Bekanntmachung des Hinweises auf die Patenterteilung: **13.10.2010**
(21) Anmeldenummer: 09159653.6
(22) Anmeldetag: 07.05.2009
(51) Int. Cl.: B24C 1/10, B21K 1/36, B21J 5/00, B23C 3/02, F01D 5/02

(54) **Verfahren zur Herstellung metallischer Bauteile**
Method for the production of metallic parts
Procédé de fabrication de composants métalliques

(30) Priorität: 31.07.2008 DE 102008035585
(43) Veröffentlichungstag der Anmeldung: 03.02.2010
(73) Patentinhaber: Rolls-Royce Deutschland Ltd & Co KG, 15827 Dahlewitz (DE)
(72) Erfinder: Mielke, Rainer, 61440 Oberursel (DE)

(56) Entgegenhaltungen:
- EP-A- 0 373 430
- WO-A-02/10332
- US-A1- 2002 050 157

## Beschreibung

Die Erfindung betrifft ein Verfahren zur Herstellung von aus vorgefertigten Schmiedeteilen durch spangebende Formgebung fertig bearbeiteten schlanken metallischen Bauteilen.

Eine Vielzahl von mechanisch hoch beanspruchten metallischen Bauteilen wird zunächst als Schmiederohling vorgefertigt, anschließend wärmebehandelt und danach durch spanende Formgebungsverfahren, zum Beispiel Fräsen, fertig bearbeitet. Um bei möglichst geringem Gewicht und entsprechend kleinen Abmessungen dennoch eine hohe Belastbarkeit und eine lange Lebensdauer des Bauteils zu gewährleisten, wird das fertige Bauteil so in den Zug-und Druckspannungsbereiche aufweisenden Schmiederohling gelegt bzw. durch spangebende Formung so aus diesem herausgearbeitet, dass die Zugspannungskomponente im Fertigteil möglichst gering ist und zudem gleichmäßig verteilt im inneren Querschnittsbereich des Bauteils liegt. Insbesondere bei asymmetrisch gestalteten Bauteilen wie den mit einem Flanscharm ausgebildeten Verdichter- und Turbinenscheiben von Gasturbinentriebwerken ist eine ungleichmäßige Verteilung der Zug- und Druckspannungskomponenten zumeist nicht zu vermeiden. Aufgrund der ungleichmäßigen Verteilung der inneren Spannungen und der Lage von Zugspannungen im Randbereich derartiger Bauteile kann es im Ergebnis der spangebenden Fertigbearbeitung, insbesondere wenn solche Bauteile aufgrund der verbesserte Werkstoffeigenschaften dünne Querschnitte, zum Beispiel bei Turbinen- und Verdichterscheiben zur Gewichtsverminderung eine dünne Membran, aufweise, durch die beiderseitigen Bearbeitungskräfte und die Zugspannungskomponenten zu Konturabweichungen kommen, die allenfalls durch aufwendige Gegenmaßnahmen im Zuge der spanenden Bearbeitung verhindert oder gehindert werden können oder zur Produktion von Ausschuss führen. Ein Ausgleich der inneren Spannungen durch eine zuvor durchgeführte Wärmebehandlung des Schmiedeteils kann andererseits zur Verminderung der Lebensdauer des fertig bearbeiteten Bauteils führen.

Der Erfindung liegt die Aufgabe zugrunde, ein Verfahren zur Herstellung von aus vorgefertigten Schmiedeteilen durch spangebende Formgebung fertig bearbeiteten Bauteilen, insbesondere von Verdichter- oder Turbinenscheiben mit dünnwandiger Membran anzugeben, das mit geringem Fertigungs- und Kostenaufwand Konturabweichungen am fertigen Bauteil reduziert oder verhindert.

Erfindungsgemäß wird die Aufgabe mit einem Verfahren gemäß den Merkmalen des Patentanspruchs 1 gelöst. Vorteilhafte Weiterbildungen der Erfindung sind Gegenstand der Unteransprüche.

Der Kern der Erfindung besteht darin, dass das Bauteil nach der spangebenden Fertigbearbeitung hinsichtlich seiner Formgenauigkeit vermessen wird und aus dem ort, der Art und der Größe der gemessenen Abweichung von der Nominallage die Lage und Ausbildung von in Randabschnitten des Bauteils vorhandenen Zugspannungsbereichen ermittelt wird. Ausschließlich diese - auf den konkav gewölbten Flächen des Bauteils befindlichen - außen liegenden Zugspannungsbereiche werden mit einer bestimmten Strahlintensität gezielt kugelstrahlverfestigt, so dass in diesen begrenzten Zonen Druckeigenspannungen aufgebaut werden und das Bauteil in eine ausbalancierte Lage zurückgezogen wird. Auf diese Weise ist es mit vergleichsweise geringem Aufwand möglich, exakt ausgerichtete Bauteile, beispielsweise mit einer dünnen Membran ausgebildete Verdichter-oder Turbinenscheiben für Triebwerke, herzustellen, die ansonsten nur mit erheblich größerem Aufwand oder in der erforderlichen Genauigkeit gar nicht gefertigt werden können.

Die Kugelstrahlverfestigung der in den Randschichten ermittelten Zugspannungsbereiche erfolgt mit einer vorgegebenen, durch das Strahlmittel und die Strahlgeschwindigkeit bestimmten Strahlintensität. Nach der Kugelstrahlbehandlung wird das Bauteil erneut vermessen und in den örtlich begrenzten Randschichten mit erhöhter Strahlintensität erneut behandelt, sofern die Verbiegung noch nicht rückgängig gemacht ist. Dieser Verfahrensschritt kann entsprechend wiederholt werden

Ein Ausführungsbeispiel der Erfindung wird mit Bezug auf die zugehörige Zeichnung, in der
- Fig. 1: schematisch ein zur spanenden Fertigbearbeitung vorgesehenes Schmiedeteil; und
- Fig. 2: schematisch eine mit einem Flanscharm asymmet- risch ausgebildete Turbinenscheibe nach der spanenden Bearbeitung
zeigt, näher erläutern.

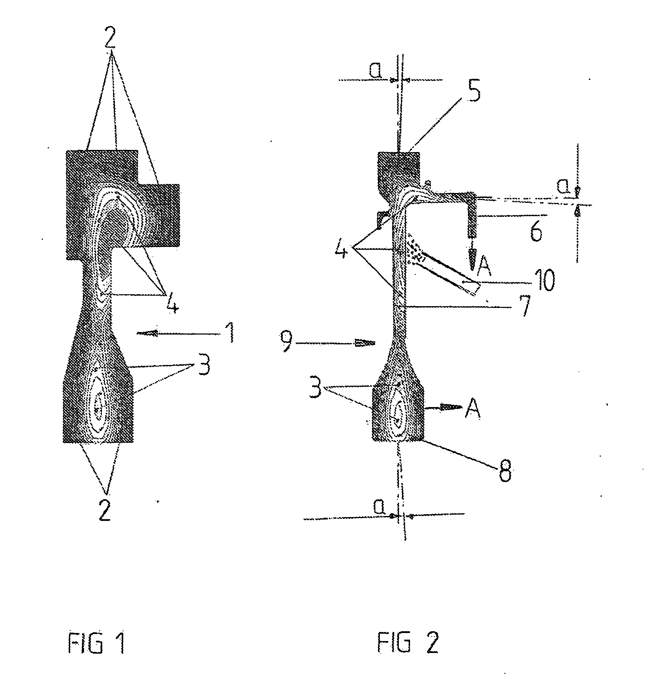

Aus Fig. 1 ist ersichtlich, dass das dort schematisch dargestellte, für die spangebende Weiterbearbeitung zu einer Turbinenscheibe für ein Gasturbinentriebwerk vorgesehene - Schmiedeteil 1 (Schmiederohling) neben Druckspannungsbereichen 2 in bestimmten Teilen auch Zugspannungsbereiche 3 und 4 aufweiset. Diese Zugspannungen sind ungleichmäßig über die Querschnittsfläche des Schmiedeteils 1 verteilt und nicht nur auf innen legende Bereiche des Rohlings beschränkt, so dass, wie Fig. 2 zeigt, im Ergebnis der spangebenden Fertigbearbeitung in der aus einen Schaufelbefestigungsteil 5, einem Flanscharm 6, einer Membran 7 und einer Nabe 8 bestehenden VerdichterScheibe 9 (spangebend geformtes metallisches Bauteil) in einzelnen Randabschnitten Zugspannungsbereiche 4 vorhanden sind. Das heißt, es gelingt nicht, die fertige Turbinenscheibe 9 so in das Schmiedeteil 1 zu legen bzw. aus diesem auszuformen, dass alle Zugspannangsbereiche in die Druckspannungsbereiche eingebunden sind. Aufgrund dieser ungünstigen Zugspannungsverteilung und der bei der spangebenden Bearbeitung auf das Werkstück wirkenden Kräfte verbiegt bzw. versieht sich die Turbinenscheibe 9 während der spangebenden Fertigbearbeitung in Pfeilrichtung A, und zwar in Abhängigkeit von den Zerspanungskraften, der Anordnung und Größe der Zugspannungsbereiche und der Dimensionierung der Turbinenscheibe 9 insbesondere im Bereich der schlank ausgebildeten Membran 7. Die in Fig. 2 beispielhaft dargestellte Verbiegung der fertig bearbeiteten Turbinenscheibe 9 gegenüber der Nominallage ist jeweils durch den Wert "a" gekennzeichnet.

Nach der spangebenden Bearbeitung wird die Turbinenscheibe 9 mit bekannten Messverfahren vermessen, um Art, Ort und Größe der Verbiegung "a", die insbesondere bei Turbinen- oder Verdichterscheiben mit einer gewichtssparend dünnen Membran 7 austritt, zu ermitteln. Auf der Grundlage des Messergebnisses und der sich daraus ergebenden Lage der Zugspannungsbereiche 4, die hier an der konkav gewölbten Vorderseite der Membran 7 und am Übergang zum Flanscharm 6 liegen, wird die Turbinenscheibe 9 anschließend mit Hilfe einer Kugelstrahlvorrichtung 10 einer örtlich begrenzten, das heißt auf die am Rand der Turbinenscheibe 9 (und nicht innen) liegenden Zugspannungsbereiche 4 beschränken Kugelstrahlbehandlung mit einer vorgegebenen Kugelstrahlintensität unterworfen. Durch die Kugelstrahlverfestigung wird ausschließlich in den bestrahlten Zugspannungsbereich 4 eine Druckeigenspannung eingeprägt, durch die die Formabweichungen "a" der Turbinenscheibe 9 rückgängig gemacht werden sollen. Anschließend wird die Turbinenscheibe 9 erneut vermessen. Sofern die Formabweichung bzw. Verbiegung "a" der Turbinenscheibe 9 noch nicht beseitigt ist, wird die Kugelstrahlbehandlung mit erhöhter Kugelstrahlintensität wiederholt. Auf diese Miese ist es möglich, vergleichsweise schlanke und ein geringes Gewicht aufweisende Verdichter- oder Turbinenscheiben oder ähnliche Bauteile ohne Formabweichungen mit geringem Aufwand zu fertigen.

### Bezugszeichenliste

- 1: Schmiedeteil, Schmiederohling
- 2: Druckspannungsbereiche
- 3: innerer Zugspannungsbereich
- 4: außen liegender Zugspannungsbereich
- 5: Schaufelbefestigungsteil
- 6: Flanscharm
- 7: Membran
- 8: Nabe
- 9: Verdichterscheibe, spangebend verformtes Bau- teil
- 10: Kugelstrahlvorrichtung
- "a": Formabweichung, Verbiegung gegenüber der Nomi- nallage
- A: Verbiegerichtung

## Patentansprüche

1. Verfahren zur Herstellung von aus vorgefertigten Schmiedeteilen (1) durch spangebende Formgebung fertig bearbeiteten schlanken metallischen Bauteilen (9), **dadurch gekennzeichnet, dass** das Bauteil (9) nach der spangebenden Fertigbearbeitung im Hinblock auf fertigungsbedingte Formabweichungen (a) vermessen wird und anhand des Messergebnisses die Lage von in Randschichten des Bauteils (9) vorhandenen Zugspannungsbereichen (4) ermittelt wird und zur Ausbalancierung des Bauteils (9) die dessen Verziehen bewirkenden Zugspannungsbereiche (4) anschließend mit einer vorgegebenen Strahlintensität kugelstrahlverfestigt werden.

2. Verfahren nach Anspruch 1, **dadurch gekennzeichnet, dass** das Bauteil (9) nach der Kugelstrahlverfestigung erneut vermessen wird und bei einer weiterhin bestehenden Verbiegung (a) gegenüber der Nominallage in dem (n) Zugspannungsbereich (en) in dem (n) Randabschnitt(en) mit erhöhter Strahlintensität erneut kugelstrahlverfestigt wird.

3. Verfahren nach Anspruch 1 oder 2, **dadurch gekennzeichnet, dass** die Bauteile (9) Turbinenscheiben oder verdichterscheiben von Gasturbinentriebwerken sind.

## Claims

1. Method for the manufacture of slender metallic components (9) finish-machined by cutting shaping from pre-manufactured forgings (1), **characterized in that** the component (9) upon finish machining by cutting is dimensionally inspected to determine contour deviations (a) induced by manufacture, that on the basis of the measuring result the position of tensile stress areas (4) in rim layers of the component (9) is determined and that for balancing the component (9) the tensile stress areas (4) causing deformation of the component (9) are subsequently subjected to controlled shot peening at a specified intensity.

2. Method in accordance with Claim 1, **characterized in that** upon controlled shot peening the component (9) is dimensionally re-inspected and - if deformation (a) as compared to the nominal position persists - the component (9) is again subjected to controlled shot peening in the tensile stress area(s) in the rim section(s) at increased peening intensity.

3. Method in accordance with Claim 1 or 2, **characterized in that** the components (9) are turbine disks or compressor disks of gas-turbine engines.

## Revendications

1. Procédé pour fabriquer de minces composants métalliques (9) façonnés par enlèvement de copeaux à partir de pièces forgées (1) préfabriquées, **caractérisé en ce qu'**après la finition par enlèvement de copeaux, le composant (9) fait l'objet de mesures portant sur des écarts de forme (a) dus à la fabrication, et qu'à l'aide des résultats des mesures est déterminée la position de zones sous contraintes de traction (4) présentes dans des couches marginales du composant (9), et que pour équilibrer le composant (9), les zones sous contraintes de traction (4) provoquant sa déformation sont ensuite consolidées par grenaillage avec une intensité de jet prédéfinie.

2. Procédé selon la revendication n° 1, **caractérisé en ce qu'**après la consolidation par grenaillage, le composant (9) est de nouveau mesuré et, qu'en cas de persistance d'une déformation (a) par rapport à la position nominale dans la/les zone(s) sous contrainte de traction dans la/les section(s) marginale(s), la consolidation par grenaillage est de nouveau effectuée avec une intensité de jet accrue.

3. Procédé selon la revendication n° 1 ou n° 2, **caractérisé en ce que** les composants (9) sont des disques de turbine ou des disques de compresseur de moteurs à turbine à gaz.
